(19) Europäisches Patentamt

European Patent Office

Office européen des brevets

(11) **EP 3 886 342 A1**

(12) **EUROPEAN PATENT APPLICATION**

(43) Date of publication:
**29.09.2021 Bulletin 2021/39**

(51) Int Cl.:
*H04B 10/61* (2013.01)          *H04J 14/02* (2006.01)

(21) Application number: **20165106.4**

(22) Date of filing: **24.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Mitsubishi Electric R & D Centre Europe B.V.**
  **1119 NS Schiphol Rijk (NL)**
  Designated Contracting States:
  **FR**
• **Mitsubishi Electric Corporation**
  **Tokyo 100-8310 (JP)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventor: **FROC, Gwillerm**
**35708 RENNES Cedex 7 (FR)**

(74) Representative: **Cabinet Le Guen Maillet**
**3, impasse de la Vigie**
**CS 71840**
**35418 Saint-Malo Cedex (FR)**

(54) **COHERENT OPTICAL RECEIVER**

(57)     A coherent optical receiver for amplitude-shift keying modulation comprises a local oscillator, a polarization-diversity actuator configured for modifying an optical signal output by the local oscillator and a 2 x 2 coupler for coupling the optical signal output by the polarization-diversity actuator and an amplitude-shift keying modulated optical signal from a coherent optical transmitter. The local oscillator thus provides a boosting effect to the amplitude-shift keying modulated optical signal. In a 1-branch arrangement, the coherent optical receiver comprises a photodiode followed by a Direct Current filter, a transimpedance amplifier and a controlling unit. When the controlling unit detects that the signal output by the transimpedance amplifier is insufficient, it instructs the polarization-diversity actuator to perform a modification of ellipticity main axis orientation and/ or a modification of ellipticity phase shift. Thus, low complex coherent optical receiver is achieved.

Fig. 2

**EP 3 886 342 A1**

**Description**

TECHNICAL FIELD

The present invention generally relates to optical communications and more particularly to coherent optical receivers for optical communications.

RELATED ART

Optical communications, such as passive optical networks (PONs), are increasingly used to give network access (typically Internet access) to residential or office gateways, or data centers, in the scope of FTTH ("Fiber To The Home") technology deployment. Optical communications may also be used to ensure mobile infrastructure backhauling for instance in the scope of the deployment of 3G (3rd generation) or 4G (4th generation) mobile technologies using typically Point-to-Point arrangements.

With the emerging 5G (5th generation) mobile technology, fronthauling is about to appear and the needs in terms of data rate capabilities are significantly increased. One may refer to the International Mobile Telecommunications (IMT) recommendations ITU-R M.2083 "IMT Vision: Framework and overall objectives of the future development of IMT for 2020 and beyond", released in September 2015. In such a framework, fronthauling is achieved by moving upstream in the mobile infrastructure processing functions that were previously performed at base stations or nearby in the 3G or 4G mobile technologies. It is referred to as *split options* in the specifications 3GPP TR 38.801 V 14.0.0 "Study on new radio access technology: Radio access architecture and interfaces", released in March 2017 (see more particularly therein Section 11 and Table A-1).

Therefore, 5G mobile technology has a wider set of requirements as compared to FTTH requirements that have driven optical access technology evolution until now. 5G mobile technology translate thus into higher nominal data rates, reduced latency and denser deployment, among others. This translates to higher nominal data rates for optical access but also expected split ratio greater than 1:128 whereas FTTH split ratio is typically 1:64 with current PON systems.

To cope with this trend, coherent optical transmission is envisaged. Coherent optical transmission is a technique that uses modulation of amplitude and phase of light to enable transporting high volume of data over an optical fiber. Digital Signal Processing (DSP) is then typically used in order to achieve robust performance of coherent transmission over the optical fiber.

Coherent optical transmission is well-known since it has revolutionized the metro and core network segments: beyond its ability to capture the entire diversity of the channel and thus its ability to gain high spectral efficiency, one can cites good optical receiver sensitivity and good wavelength selectivity as well.

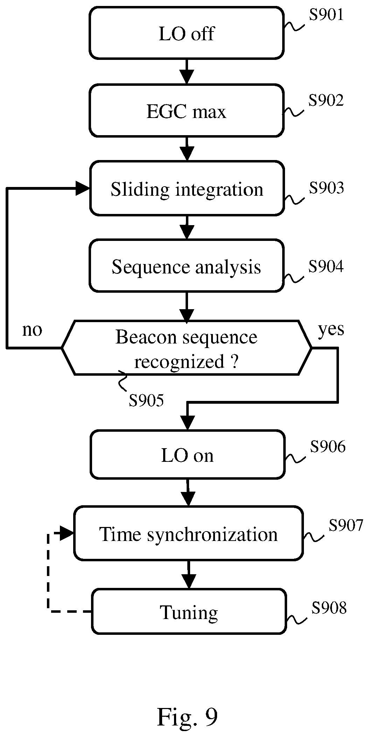

Fundamentals of coherent optical transmissions as used in metro and core network segments can be found in "Fundamentals of Coherent Optical Fiber Communications", K. Kikuchi, Journal of Lightwave Technology, vol. 34, n°1, released in January 2016. This document depicts a coherent optical receiver employing phase and polarization diversities. Two phase-diversity homodyne receivers based on 90° optical hybrid power splitters in order to retrieve phase and quadrature components of injected coherent optical signal are placed in a polarization-diversity configuration, with usage of a common Local Oscillator (see more particularly therein Fig. 9). DSP arrangement has to be complementarily used in order to retrieve modulated symbols by digitally processing phase and polarization diversities output so as to restore complex signal amplitude in a stable manner despite fluctuations of carrier phase and signal state of polarization. To do so, the DSP arrangement comprises an anti-aliasing filter, a 4-channel Analogue-to-Digital Converter (ADC), a Frequency Domain Equalizer (FDE) enabling symbol rate extraction for driving back the ADC, an adaptive Finite Impulse Response (FIR) equalizer enabling clock phase recovery and a carrier phase estimator (see more particularly therein Fig. 18).

One main issue with coherent optical transmissions is that transmission over long-range optical fibers implies slow but large state-of-polarization changes large enough to be sensible at the coherent optical receiver. To ensure transmission continuity, two alternative approaches are used in order to avoid signal fading due to mismatch between the state of polarization of the signal received via the optical fiber and the state of polarization of the local oscillator. One approach is to compensate change of state of polarization induced by the long-range optical fiber using complex Digital Signal Processing with full diversity polarization receivers. The other approach is to track the state of polarization using Optical Phase Lock Loop (OPLL), for instance in the case where full polarization diversity cannot be recovered. Both approaches lead to complex analog and/or digital arrangements with at least two analog branches. One may for example refer to "Endless Polarization Control Systems for Coherent Optics", Noé et al, IEEE Journal of Lightwave Technology, vol. 6, n°7, pp. 1199-1207, released in July 1988. As disclosed therein, tracking state of polarization thus typically supposes endless polarization transformer coupled with an adaptive control loop, which is a rather complex and costly arrangement.

It appears from the foregoing explanation that intrinsic theoretical and hardware implementation applied to metro and core network segments are not compatible with low design complexity, low power consumption, low manufacturing cost and complexity, low deployment cost and complexity, and small size, which are key requirements in the network access segment. Indeed, the quantity of equipment to install in the network access segment is far higher than in the metro and core network segments, especially to meet geographical density expectations of base stations in 5G mobile technology, and furthermore, the places to install such equipment are often particularly limited in terms of space (home device, base stations installation sites...).

In addition to the scope of the 5G mobile technology, coherent optical transmissions might be suitable for FTTH evolution. Indeed, the increasing demand for high-speed Internet gives rise to increasing the split ratio of current PON systems in addition to higher data rates. However, as for the deployment of base stations in the 5G mobile technology, Optical Network Units (ONUs) as used in such PON systems require low design complexity, low power consumption, low manufacturing cost and complexity, low deployment cost and complexity, and small size, since they are deployed in users premises or nearby. Coherent optical transmissions technology as used in the metro or core network segments is therefore not suitable for FTTH evolution, either.

It is therefore desirable to provide a cost-effective solution of coherent optical receiver suitable for access network considerations. It is desirable to provide a solution that is simple as possible.

SUMMARY OF THE INVENTION

To that end, it is proposed a coherent optical receiver intended to receive an amplitude-shift keying modulated optical signal from a coherent optical transmitter, comprising: a local oscillator; a polarization-diversity actuator configured for modifying an optical signal output by the local oscillator; so as to form an optical signal with elliptical polarization with main axis orientation $\varphi_l$ and ellipticity phase shift $\psi_l$; a 2 x 2 coupler, having one input aiming at receiving the amplitude-shift keying modulated optical signal received from the coherent optical transmitter and the other input receiving another optical signal which is output by a set formed by a local oscillator and the polarization diversity actuator, so as to enable the local oscillator to provide a boosting effect to the amplitude-shift keyingmodulated optical signal received from the coherent optical transmitter, the 2x2 coupler further having one output connected to a set formed by a photodiode followed by a Direct Current filter removing a continuous component of an analog electrical signal output by the photodiode; a transimpedance amplifier converting current electrical signal output by the Direct Current filter into voltage electrical signal; a controlling unit in form of electronic circuitry configured for detecting voltage electrical signal output by the transimpedance amplifier and, when the voltage electrical signal output by the transimpedance amplifier is below or equal to a predefined threshold percentage of theoretical maximum achievable by the boosting effect, the electronic circuitry is further configured for instructing a configuration change of the polarization diversity actuator, wherein the configuration change is at least one configuration modification selected among the following set Li: modification of the ellipticity main axis orientation $\varphi_l$; and modification of the ellipticity phase shift $\psi_l$. Thus, by using such a single-branch coherent optical receiver, no complex Digital Signal Processing and no Optical Phase Lock Loop is used, and therefore cost-effective solution is provided for access network considerations.

In a particular embodiment, the modification of the ellipticity main axis orientation $\varphi_l$ is performed by applying a predefined shift equal to $\dfrac{\pi}{4}$ and the modification of the ellipticity phase shift $\psi_l$ is performed by applying a predefined shift equal to $\dfrac{\pi}{2}$. Thus, recovering effective boosting effect (thanks to boosting terms provided by the local oscillator) is easily achieved.

In a particular embodiment, the polarization-diversity actuator comprises a variable waveplate for enabling modification of the ellipticity main axis orientation $\varphi_l$ and for enabling modification of the ellipticity phase shift $\psi_l$. Thus, configuration modification is easily implemented, at low complexity and cost.

In a particular embodiment, the set Li further includes modification of a phase $\phi_l$ of the optical signal output by the set formed by the local oscillator and the polarization diversity actuator. Thus, the single-branch coherent optical receiver is further improved.

In a particular embodiment, the modification of the modification of the phase $\phi_l$ is performed by applying a predefined shift equal to $\pi$. Thus, improvement thanks to modification of the phase $\phi_l$ is easily achieved.

In a particular embodiment, the polarization-diversity actuator comprises a variable delay line for enabling modification of the phase $\phi_l$. Thus, configuration modification for the phase $\phi_l$ is easily implemented, at low complexity and cost.

In a particular embodiment, the electronic circuitry is further configured for modifying gain of the local oscillator and/or modifying gain of the transimpedance amplifier before deciding to apply configuration change by selecting at least one configuration modification among the set Li. Thus, reactivity of the coherent optical receiver is improved.

In a particular embodiment, the electronic circuitry is configured for: checking whether a mean level of the voltage electrical signal output by the transimpedance amplifier over integration or averaging time is suitable, namely above the predefined threshold percentage and below an upper predefined threshold percentage so as to avoid saturation conditions; when the mean level is not suitable in that a signal mean level decrease is needed, decreasing signal mean level by adjusting gain of the transimpedance amplifier as first priority and decreasing signal mean level by adjusting gain of the local oscillator as second priority; and when the mean level is not suitable in that a signal mean level increase is needed, checking whether there is still margin either to increase gain of the transimpedance amplifier or to increase gain of the local oscillator, and when such margin exists, increasing signal mean level by adjusting gain of the transimpedance amplifier as first priority and increasing signal mean level by adjusting gain of the local oscillator as second priority, and otherwise, instructing configuration change by selecting at least one configuration modification among the set Li. Thus, reactivity of the coherent optical receiver is further improved.

In a particular embodiment, the electronic circuitry is configured for performing integration or averaging over a quantity N of samples of the voltage electrical signal output by the transimpedance amplifier and for dynamically defining the quantity N by implementing: performing integration or averaging using a maximum quantity of samples Nmax; decreasing the quantity N and checking whether the voltage electrical signal output by the transimpedance amplifier is still detected with the decreased integration or averaging length N; as far as the voltage electrical signal output by the transimpedance amplifier is still detected, continuing decreasing the quantity N, and otherwise, restoring the previous value of the quantity N. Thus, integration length and energy consumption of the coherent optical receiver are improved.

In a particular embodiment, the electronic circuitry is configured for initializing configuration of the coherent optical receiver by implementing: activating the local oscillator; configuring a gain of the transimpedance amplifier at a maximum value EGCmax; checking, for at least one time period of duration Tc, whether the voltage electrical signal output by the transimpedance amplifier is detected, the duration Tc being a duration of a cycle period that gives rhythm to the transmissions from the coherent optical transmitter to the coherent optical receiver; when the voltage electrical signal output by the transimpedance amplifier is detected, performing adjustment of the gain of the transimpedance amplifier, and possibly of a gain of the local oscillator, so as to reduce the gain of the transimpedance amplifier, and otherwise, instructing configuration change by selecting at least one configuration modification among the set Li. Thus, initialization of the coherent optical receiver is easily achieved.

In a particular embodiment, the electronic circuitry is configured for initializing configuration of the coherent optical receiver by implementing: configuring a gain of the transimpedance amplifier at a maximum value EGCmax, the local oscillator being inactivated; performing sliding integration of the voltage electrical signal output by the transimpedance amplifier over a duration of a quantity *Ns* of several modulation symbols; once the voltage electrical signal output by the transimpedance amplifier is detected, performing sequence analysis as far as a predefined sequence of a beacon supposed to be transmitted by the coherent optical transmitter at the beginning of each transmission cycle is recognized; when the predefined sequence is recognized, activating the local oscillator and performing time synchronization so as to determine instants of beginning of later transmission cycles; tuning configuration of the coherent optical receiver by firstly testing an initial configuration at a determined instant of the beginning of a later transmission cycle, and instructing configuration change of the polarization diversity actuator by selecting at least one configuration modification among the set Li as far as the voltage electrical signal output by the transimpedance amplifier is not above the predefined threshold percentage. Thus, initialization of the coherent optical receiver is made faster.

In a particular embodiment, the controlling unit includes a look-up table that links, on one hand, actuation of modification in the ellipticity main axis orientation $\varphi_l$ and/or of modification of the ellipticity phase shift $\psi_l$ and, on the other hand, commands to be applied to the polarization diversity actuator. Thus, modification change is easily implemented.

In a particular embodiment, various configurations of the polarization diversity actuator lead to a same modification of the ellipticity main axis orientation $\varphi_l$ and/or of the ellipticity phase shift $\psi_l$, and the look-up table further contains reactivity information for switching from any current configuration of the polarization diversity actuator to any other targeted configuration of the polarization diversity actuator, and the electronic circuitry is configured for, when changing configuration of the configuration of the polarization diversity actuator, selecting the configuration of the polarization diversity actuator which implies the shortest adjustment time in view of a current configuration of the polarization diversity actuator. Thus, reactivity of the polarization diversity actuator is improved.

In a particular embodiment, the electronic circuitry is configured for squaring the voltage electrical signal output by the transimpedance amplifier when performing signal level detection. Thus, complexity of signal detection is further lowered.

It is further proposed an Optical Network Unit intended to be used in a Passive Optical Network, wherein the Optical Network Unit includes the coherent optical receiver according to any one of claims 1 to 12 for receiving an amplitude-shift keying modulated optical signal transmitted by a coherent optical transmitter included in an Optical Line Terminal of the Passive Optical Network. Thus, low complexity and cost Optical Network Unit solution is provided to Passive Optical Network infrastructures.

BRIEF DESCRIPTION OF THE DRAWINGS

The characteristics of the invention will emerge more clearly from a reading of the following description of at least one example of embodiment, said description being produced with reference to the accompanying drawings, among which:

Fig. 1A schematically represents an arrangement of an optical communications system of passive optical network type, in which the present invention may be implemented;

Fig. 1B schematically represents an arrangement of an optical communications system of point-ot-point type, in which the present invention may be implemented;

Fig. 2 schematically represents a coherent optical receiver arrangement that can be used in the optical communications system of Fig. 1A or Fig. 1B;

Fig. 3 schematically represents an arrangement of a polarization diversity actuator of the coherent optical receiver of Fig. 2;

Fig. 4 schematically represents an arrangement of a value decision block of the coherent optical receiver of Fig. 2;

Fig. 5 schematically represents an algorithm performed by a controlling unit of the coherent optical receiver of Fig. 2 for adjusting configuration of the coherent optical receiver;

Fig. 6 schematically represents an algorithm performed by the controlling unit for adjusting configuration of the coherent optical receiver, in a particular embodiment;

Fig. 7 schematically represents an algorithm performed by the controlling unit for configuring an integration or averaging length for signal detection, in a particular embodiment;

Fig. 8 schematically represents an algorithm performed by the controlling unit for initializing configuration of the coherent optical receiver, in a particular embodiment; and

Fig. 9 schematically represents an algorithm performed by the controlling unit for initializing configuration of the coherent optical receiver, in another particular embodiment.

DETAILED DESCRIPTION OF AT LEAST ONE EMBODIMENT

It has to be noticed that, since wavelength and frequency are tied together through a direct inverse relationship, these two terms are indifferently used by the one skilled in the art, as they refer to the same concept.

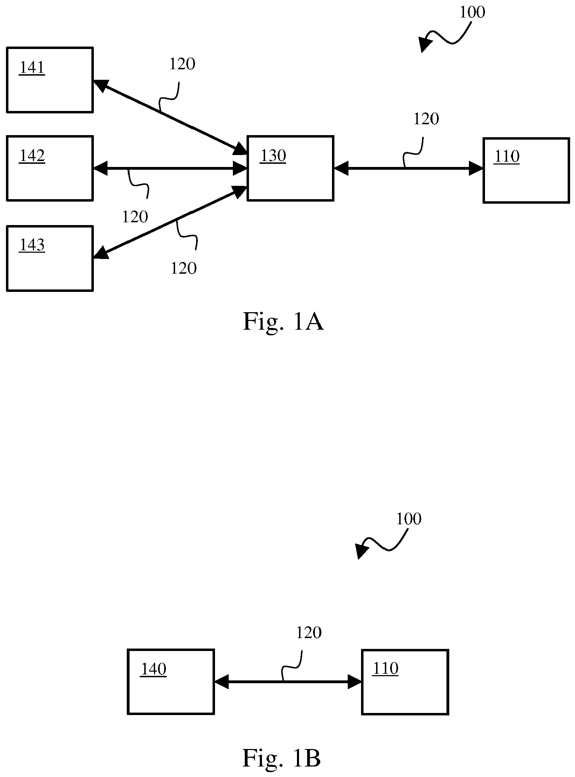

The present invention can be applied for implementing a low complexity coherent optical receiver intended to receive and detect optical signals transmitted by a coherent optical transmitter. More particularly, the coherent optical receiver is suitable for receiving amplitude-shift keying (ASK) modulated optical signals. For example, the amplitude-shift keying (ASK) modulated optical signals are Non-Return-to-Zero On-Off Keying (NRZ-OOK) modulated optical signals. Figs. 1A and 1B described hereafter introduce examples of contexts in which the present invention may be beneficial.

**Fig. 1A** schematically represents an arrangement of an optical communications system 100 of passive optical network type, in which the present invention may be implemented.

The optical communications system 100 in Fig. 1A comprises a master device 110, typically an OLT (*Optical Line Terminal*) device, and a plurality of slave devices 141, 142, 143, typically ONU (*Optical Network Units*) devices.

The optical communications system 100 in Fig. 1A may further comprise at least one spectral splitter device 130 and/or at least one power splitter.

Each spectral splitter device 130 comprises a pair of optical band-pass sets of filters for each PON, aiming at filtering respective wavelength bands, and thus enabling said spectral splitter device 130 to perform Wavelength Division Multiplexing (WDM). It can be noted that an equivalent arrangement can be obtained by sticking filtering films on reception diodes instead of using the spectral splitter device 130.

Each power splitter enables increasing the quantity of slave devices that can be connected to the master device 110, by dividing input signal power by the quantity of outputs towards the slave devices connected thereto. Each output of the power splitter device thus transmits the same optical information as received as input signal, the power splitter device having only impact on signals power.

The slave devices 141, 142, 143 are interconnected with the master device 110 via the at least one spectral splitter device 130 and/or the at least one power splitter using optical fibers 120.

In the context of PON, ONUs are typically intended to be located at end-user households for FTTH services, and OLT enables ONUs to access a metropolitan or a core network (not shown). Such PON may also be used for mobile network infrastructures services.

**Fig. 1B** schematically represents an arrangement of an optical communications system of point-to-point type, in which the present invention may be implemented.

The optical communications system 100 in Fig. 1B comprises a master device 110 and a slave device 140.

The master device 110 and the slave device 140 are interconnected using optical fiber 120.

In mobile network fronthauling infrastructure, the slave device 140 is typically located at a remote radio head location and the master device 110 is located at a baseband unit (BBU) location. Such arrangement may also be used for mobile network backhauling infrastructure between BBUs and core network access terminals.

In both arrangements of Figs. 1A and 1B, optical transmissions of information from the master device 110 to one or more slave devices is referred to as *downlink transmissions* and in the reverse direction to as *uplink transmissions.*

In both arrangements of Figs. 1A and 1B, it is desirable to install a low complex and cost-effective optical receiver, at least in the slave devices 140, 141, 142, 143, and potentially in the master device 110.

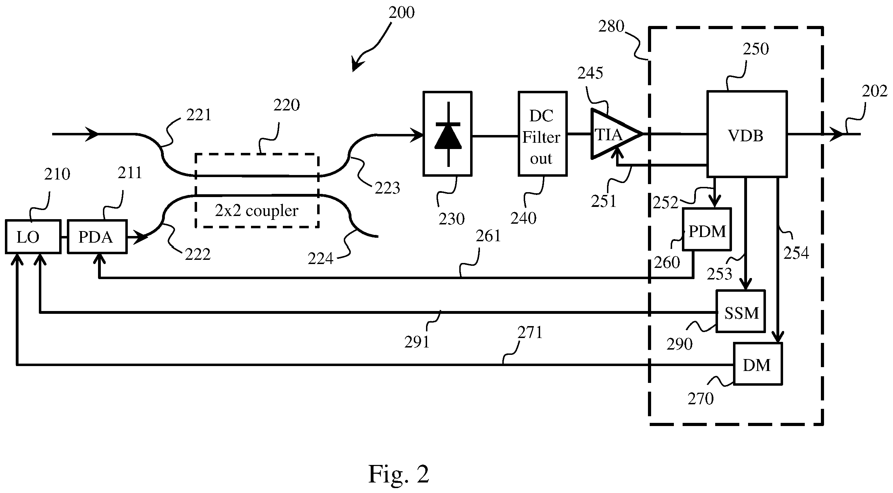

**Fig. 2** schematically represents a coherent optical receiver arrangement that can be used in the optical communications system 100 of Fig. 1A or Fig. 1B. The coherent optical receiver 200 outputs signals 202 to be processed for demodulation.

According to the arrangement shown in Fig. 2, the coherent optical receiver 200 comprises a 2x2 coupler 220. For example, the 2x2 coupler 220 is a fiber fused coupler or a directional coupler.

On one input 221 of the 2x2 coupler 220 is injected an optical signal transmitted by a coherent optical transmitter. On the other input 222 of the 2x2 coupler 220 is injected another optical signal which is output by a set formed by a local oscillator LO 210 and a polarization diversity actuator PDA 211.

The local oscillator LO 210 is a laser diode or an arrangement comprising a laser diode. It has to be noted that vertical-cavity surface-emitting laser (VCSEL) may be used as local oscillator.

To one output 223 of the 2x2 coupler 220 is connected a set formed by a photodiode 230 followed by a DC (Direct Current) filter 240 of the coherent optical receiver 200. The DC filter 240 is an arrangement removing the continuous component of the analog electrical signal output by the photodiode 230. The other output 224 of the 2x2 coupler 220 is left unused with respect to optical detection (i.e., may be used, or not, for other operations). Doing so leads to a single analog branch coherent optical receiver.

Generally speaking, a polarized optical signal $E(t)$ can be written in the Jones representation as follows:

$$E(t) = E_0 \, e^{i(2\pi\omega t + \phi)} \begin{pmatrix} \cos\varphi \\ e^{i\psi}\sin\varphi \end{pmatrix}$$

which corresponds to a vector that describes an ellipse in a transverse plane with respect to the propagation direction of the optical signal. In the formula above, $E_0$ is the amplitude of the optical signal, $\omega$ is the wavelength of the optical signal and $\phi$ is the phase of the optical signal. Moreover, in the formula above, $\varphi \in [0; \pi[$ is the orientation of the main axis of the polarization ellipse and $\psi$ is the ellipticity phase shift. We can find the particular cases of $\psi = 0$ for a linear polarization and of $\psi = (2k+1)\dfrac{\pi}{2}, \; k \in \mathbb{N},$ for a circular polarization.

Thus, on the output 223 of the 2x2 coupler 220, the 2x2 coupler 220 provides the following combined signal C(t):

$$C(t) = E_{0l} \, e^{i(2\pi\omega_l t + \phi_l)} \begin{pmatrix} \cos\varphi_l \\ e^{i\psi_l}\sin\varphi_l \end{pmatrix} + E_{0s} \, e^{i(2\pi\omega_s t + \phi_s)} \begin{pmatrix} \cos\varphi_s \\ e^{i\psi_s}\sin\varphi_s \end{pmatrix}$$

wherein the optical signal parameters with the index *s* concern the optical signal received from the coherent optical transmitter, with signal amplitude $E_{0s}$ modulated at modulation symbol duration rate, and the optical signal parameters with the index *l* concern the optical signal output by the set formed by local oscillator LO 210 and the polarization diversity actuator PDA 211, with non-modulated signal amplitude $E_{0l}$.

It has to be understood here that the optical signal output by the set formed by local oscillator LO 210 and the polarization diversity actuator PDA 211 is not modulated with respect to transmission of information, but the amplitude $E_{0l}$ may, in some embodiments as detailed hereafter, be changed in order to help improving optical detection dynamics. It thus means that variations of the signal amplitude $E_{0l}$ contain no meaningful information as such.

It can be noted that, when $E_{0l} = E_{0s}$, $\omega_l = \omega_s$, $\varphi_l = \varphi_s$ and $\phi_l = \phi_s + (2k+1)\pi$, $k \in \mathbb{N},$ then the combined signal $C(t)$ vanishes to zero at any time. And it can be further noted that such a situation occurs only for two fields that differ only by a phase shift (same amplitude, same frequency, same state of polarization with fields shifted by $\pi$).

Thus, considering amplitude shift keying optical signals and further considering the impact of the DC filter 240 at the output of the photodiode 230, the current $i(t)$ output by the DC filter 240 can be expressed as follows:

$$i(t) = \left(E_{0s}{'}\right)^2$$

$$+2E_{0s}{'}E_{0l}{'}\cos(\Delta\varphi)\cos\left(\frac{\Delta\psi}{2}\right)\cos\left(2\pi\Delta vt + \Delta\phi + \frac{\Delta\psi}{2}\right)$$

$$+2E_{0s}{'}E_{0l}{'}\cos(\varphi_s + \varphi_l)\sin\left(\frac{\Delta\psi}{2}\right)\sin\left(2\pi\Delta vt + \Delta\phi + \frac{\Delta\psi}{2}\right)$$

wherein $E_{0s}' = R. E_{0s}$ and $E_{0l}' = R. E_{0l}$ with $R<1$ being a conversion rate by the photodiode 230 of incident photons into electrons,
wherein $\Delta\varphi = \varphi_s - \varphi_l$ is a difference in orientation of the main axes of the polarization ellipses,
wherein $\Delta v = \omega_s - \omega_l$ is a wavelength detuning,
wherein $\Delta\phi = \phi_s - \phi_l - \xi_c$ is a phase shift between the optical signal received from the coherent optical transmitter and the optical signal output by the set formed by local oscillator LO 210 and the polarization diversity actuator PDA 211 further taking into account of a phase shift $\xi_c$ introduced by the 2x2 coupler 220 between its inputs, with typically

$$\xi_c = \frac{\pi}{2},$$

and wherein $\Delta\psi = \psi_s - \psi_l$ is a difference in ellipticity phase shift.

It can be noted from the formula above that i(t) equals to zero independently of $\varphi_s$ and $\varphi_l$ when $E_{0s}' = E_{0l}'$ (which means that $E_{0s} = E_{0l}$) with further $\Delta\phi = (2q + 1)\pi$, $q \in \mathbb{N}$, and $\Delta\psi = 2k\pi$, $k \in \mathbb{N}$.

It can be noted from the formula above that i(t) also equals to zero independently of $\varphi_s$ and $\varphi_l$ when $E_{0s}' = E_{0l}'$ (which means that $E_{0s} = E_{0l}$) with further $\Delta\phi = (2q + 1)\pi$, $q \in \mathbb{N}$, and $\Delta\psi = (2k + 1)\pi$, $k \in \mathbb{N}$.

It thus means that, in these two cases, the optical signal received from the coherent optical transmitter and the optical signal output by the set formed by the local oscillator LO 210 and the polarization diversity actuator PDA 211 are in the same state of polarization but with a phase shift of $\pi$. In view of the conditions to face these cases, they might be considered as marginally occurring, since they might be faced in one sample among successive samples in a modulation symbol, which can be easily recovered during demodulation operations. Nevertheless, providing a solution, as herein detailed in at least one particular embodiment, when these cases are faced improves coherent optical reception performance.

More importantly, the local oscillator LO 210 enables boosting the optical signal coming from the optical fiber, as far as the following situations are not met:

- $\cos(\Delta\varphi) = 0$ and $\cos(\varphi_s + \varphi_l) = 0$

- $\cos(\Delta\varphi) = 0$ and $\sin\left(\frac{\Delta\psi}{2}\right) = 0$

- $\cos\left(\frac{\Delta\psi}{2}\right) = 0$ and $\cos(\varphi_s + \varphi_l) = 0$

Apart from these situations, the local oscillator LO 210 thus enables increasing sensitivity of the optical receiver, which, among others, enables improving split ratio over PON and enables increasing transmission data rate.

In order to avoid the situations above, the polarization diversity actuator PDA 211 is controlled so as to modify on demand the optical signal as output by the local oscillator LO 210. In other words, controlling the polarization diversity actuator PDA 211 enables escaping the situations above when encountered. Indeed, even a small change of state of polarization of the signal injected in the input 222 of the 2x2 coupler 220 creates enough difference so that at least one of the following terms, referred to as *boosting terms,*

$$2E_{0s}{}'E_{0l}{}'\cos(\Delta\varphi)\cos\left(\frac{\Delta\psi}{2}\right)\cos\left(2\pi\Delta vt+\Delta\phi+\frac{\Delta\psi}{2}\right)$$

and

$$2E_{0s}{}'E_{0l}{}'\cos(\varphi_s+\varphi_l)\sin\left(\frac{\Delta\psi}{2}\right)\sin\left(2\pi\Delta vt+\Delta\phi+\frac{\Delta\psi}{2}\right)$$

does not equal zero. Indeed, a boosting effect is obtained once at least one of these boosting terms does not equal zero and further when these terms do not compensate for each other.

In order to control the polarization diversity actuator PDA 211, the coherent optical receiver further comprises a controlling unit 280 in the form of electronic circuitry, which is present at output of the DC filter 240 and loops back to the polarization diversity actuator PDA 211 via a line 261. The controlling unit 280 may further also control the local oscillator LO 210 and therefore loop back to the local oscillator LO 210 via at least one line, for example a line 271 and a line 291.

The electronic circuitry forming the controlling unit 280 may be a chip or chipset, such as an FPGA (*Field-Programmable Gate Array*) or an ASIC (*Application-Specific Integrated Circuit*). In a variant, the electronic circuitry forming the controlling unit 280 may be a processor (microcontroller, a DSP (Digital Signal Processor)...) accompanied by at least one memory. After being powered on, the processor is capable of reading instructions from the memory and executing these instructions for implementing functions of the controlling unit 280. In this case, the functions of the controlling unit 280 are in software form, which may be stored on a non-transitory storage medium, such as an SD (Secure Digital) card.

A transimpedance amplifier TIA 245 is present between the DC filter 240 and the controlling unit 280, so as to convert input current (as output by the DC filter 240) to output voltage. Preferably, the controlling unit 280 loops back to the transimpedance amplifier TIA 245 for electrical gain control via a line 251.

The controlling unit 280 performs coarse control of changes of the state of polarization but does not perform tracking of the state of polarization. In the case of the present invention, there is no need to precisely know the state of polarization of the optical signal received from the coherent optical transmitter, neither the state of polarization of the optical signal output by the set formed by the local oscillator LO 210 and the polarization diversity actuator PDA 211. In the scope of the present invention, the controlling unit 280 determines whether or not the state of polarization of the set formed by the local oscillator LO 210 and the polarization diversity actuator PDA 211 is suitable for obtaining operable boosting terms, and if not (without knowing which relative states of polarization led to such situation), the controlling unit 280 changes the state of polarization of the optical signal output by the set formed by the local oscillator LO 210 and the polarization diversity actuator PDA 211. There is no need to determine the exact states of polarization of the optical signals and a single analog branch is sufficient to do so, which minimizes analog complexity. Moreover, no optical phase lock loop is needed, and no complex digital signal processing is needed, which further minimizes complexity. Operable boosting terms are boosting terms greater than, or equal to, a predefined threshold percentage (e.g., 20%) of their theoretical maximum; which is the maximum of the strength of the optical signal output by the local oscillator LO 210.

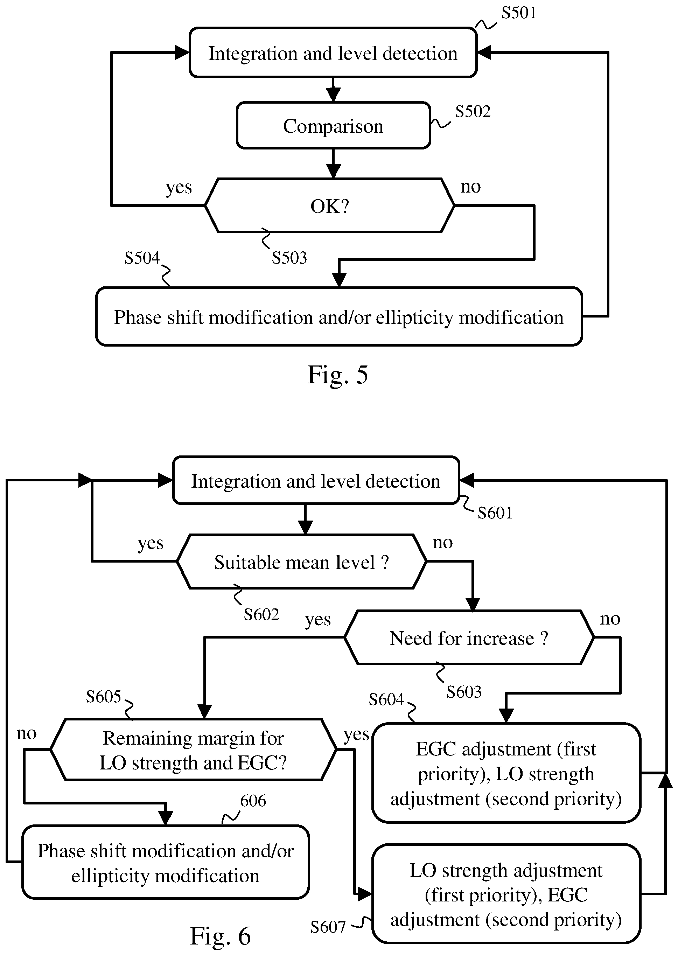

Under some circumstances as notably disclosed hereafter with respect to Fig. 6, the controlling unit 280 may decide instead as a temporary action, or as a complementary action, to modify the strength (optical gain) of the optical signal output by the local oscillator LO 210. Under some circumstances as notably disclosed hereafter with respect to Fig. 6, the controlling unit 280 may decide instead as a temporary action, or as a complementary action, to modify electrical gain of the transimpedance amplifier TIA 245.

Thus, the function of the controlling unit 280 is to ensure that the electrical signal i(t) does not vanish to zero while the optical signal received from the coherent optical transmitter contains useful information and thus to ensure that the boosting effect supposed to be provided by the local oscillator LO 210 is maintained as much as possible above the predefined threshold percentage mentioned above. It means that the boosting effect may not need to be adjusted although degradation thereof is detected by the controlling unit 280 as far as the condition relative to the predefined threshold percentage mentioned above is fulfilled.

Thus, the controlling unit 280 does notably not need to continuously run but rather operates at intervals, e.g., on a regular basis. Indeed, as explained hereafter, once the controlling unit 280 has adjusted the optical signal output by the set formed by the local oscillator LO 210 and the polarization diversity actuator PDA 211, some time lapses before occurrence of a new situation in which the electrical signal i(t) risks vanishing to zero while the optical signal received from the coherent optical transmitter contains useful information, since transmissions over long range optical fibers imply slow changes of state of polarization. The controlling unit 280 may take into account evolution history of the electrical signal output by the transimpedance amplifier TIA 245, so as to decide when to activate next. The controlling unit 280 may control standby time proportionally with the distance of electrical signal i(t) with respect to the predefined threshold percentage mentioned above. In other words, the controlling unit 280 may increase standby time when evolution of the electrical signal $i(t)$ is far from risking vanishing to zero and may decrease standby time when evolution of the electrical signal $i(t)$ is in reverse situation.

Once the controlling unit 280 detects that the electrical signal output by the transimpedance amplifier TIA 245 is below a predetermined threshold, the controlling unit 280 controls the polarization diversity actuator PDA 211 so as to change the state of polarization of the optical signal output by the set formed by the local oscillator LO 210 and the polarization diversity actuator PDA 211. The boosting effect is consequently obtained in the case where the optical signal received from the coherent optical transmitter contains useful information, since a sensitive change of the state of polarization would allow escaping the encountered situation where the electrical signal $i(t)$ has vanished to zero although the optical signal received from the coherent optical transmitter contains useful information. In the worst case, it can be demonstrated that the contribution related to the boosting terms is greater than the contribution of the optical signal received from the coherent optical transmitter as soon as the states of polarization of both optical signals injected in the 2x2 coupler 220 are shift by a value that is small percentage (e.g., 5%) of the distance between adjacent optimal relative states of polarization.

After several kilometers in the optical fiber, the state of polarization of the optical signal originally transmitted by the coherent optical transmitter is randomly distributed over the Poincaré sphere. Thus, the state of polarization of the optical signal as received by the coherent optical receiver 200 is very likely to be elliptical. Thus, the optical signal output by the set formed by the local oscillator LO 210 and the polarization diversity actuator PDA 211 is controlled to be elliptically polarized.

In order to change the state of polarization of the optical signal output by the set formed by the local oscillator LO 210 and the polarization diversity actuator PDA 211 when the electrical signal $i(t)$ falls in a zero region although an optical signal containing useful information is received from the coherent optical transmitter, the controlling unit 280 instructs the polarization diversity actuator PDA 211 to change at least one ellipticity parameter among the angle $\varphi_l$ of orientation of the main axis of the polarization ellipse and the ellipticity phase shift $\psi_l$ of the optical signal output by the set formed by the local oscillator LO 210 and the polarization diversity actuator PDA 211. It enables making operable the boosting terms and recovering a sensitive photocurrent. In a particular embodiment, the controlling unit 280 instructs the polarization diversity actuator PDA 211 to change, by a predefined shift, the at least one ellipticity parameter among the angle $\varphi_l$ of orientation of the main axis of the polarization ellipse and the ellipticity phase shift $\psi_l$ of the optical signal output by the set formed by the local oscillator LO 210 and the polarization diversity actuator PDA 211.

In a preferred embodiment, the predefined shift targets a stationary extremum of the electrical signal $i(t)$. In this preferred embodiment, the predefined shift is $\dfrac{\pi}{4}$ for the orientation axis $\varphi_l$ (and consequently for $\Delta\varphi$) and $\dfrac{\pi}{2}$ for the ellipticity phase shift $\psi_l$ (and consequently for $\Delta\psi$).

In a particular embodiment, the controlling unit 280 comprises a value decision block VDB 250 and a polarization diversity manager PDM 260. In a more particular embodiment, the controlling unit 280 further comprises a signal strength manager SSM 290. In a yet more particular embodiment, the controlling unit 280 further comprises a detuning manager DM 270.

The value decision block VDB 250 analyzes the electrical signal output by the transimpedance amplifier TIA 245. The value decision block VDB 250 thus analyzes the voltage output by the transimpedance amplifier TIA 245. To do so, the value decision block VDB 250 compares the value of the voltage output by the transimpedance amplifier TIA 245 with the predefined threshold percentage (e.g., 20%) of the theoretical maximum achievable by the boosting effect, i.e. theoretical maximum achievable by the boosting terms. The theoretical maximum is defined according to the gain of the local oscillator LO 210, to the conversion rate R by the photodiode 230 of incident photons into electrons and to the gain of the transimpedance amplifier TIA 245. When the voltage output by the transimpedance amplifier TIA 245 is below the predefined threshold percentage of the theoretical maximum achievable thanks to the boosting terms, the value decision block VDB 250 acts to change configuration of the polarization diversity actuator PDA 211 and/or of the local oscillator LO 210. According to the present invention, the value decision block VDB 250 acts to change configuration of the polarization diversity actuator PDA 211 so as to modify at least one ellipticity parameter among the angle $\varphi_l$ of orientation of the main axis of the polarization ellipse and the ellipticity phase shift $\psi_l$ of the optical signal output by the set formed by the local oscillator LO 210 and the polarization diversity actuator PDA 211. Under some circumstances, the value decision block VDB 250 may, as an alternative or in complement, modify phase of the optical signal output by the set formed by the local oscillator LO 210 and the polarization diversity actuator PDA 211 so as to escape the aforementioned situations where the electrical signal $i(t)$ equals to zero independently of $\varphi_s$ and $\varphi_l$. Under some circumstances, the value decision block VDB 250 may, as an alternative or in complement, modify strength of the optical signal output by the local oscillator LO 210 (i.e., modification of the gain of the local oscillator LO 210) and/or modify the gain of the transimpedance amplifier TIA 245. Thus, the value decision block VDB 250 improves the signal-to-noise ratio of the electrical signal to be used for performing demodulation.

The value decision block VDB 250 may take into account evolution history of the electrical signal output by the transimpedance amplifier TIA 245, as already explained.

The value decision block VDB 250 may further implement a detuning analysis function by detecting a beating signal over a predefined quantity of modulation symbols at a frequency equal to the wavelength detuning, i.e., deviation between the wavelength of the optical signal received from the coherent optical transmitter and the wavelength of the optical signal output by the set formed by the local oscillator LO 210 and the polarization diversity actuator PDA 211. Detection of the beating signal may be performed, as known in the art, thanks to Fast Fourier Transform and spectral analysis for identifying peak at a beating frequency which corresponds to the wavelength detuning $\Delta\upsilon$. Another approach, as known in the art, is for example to perform detection of the beating signal by analog convolution with a cosine signal. In case of detuning, the value decision block VDB 250 then acts for adjusting, in accordance to the detected beating frequency, the wavelength of the optical signal output by the local oscillator LO 210. The value decision block VDB 250 accordingly instructs the detuning manager DM 270 to change wavelength configuration of the local oscillator LO 210.

The polarization diversity manager PDM 260 controls the polarization diversity actuator PDA 211 via the line 261. The polarization diversity manager PDM 260 converts instructions, which are received from the value decision block VDB 250 via a line 252 for modifying at least one ellipticity parameter among the angle $\varphi_l$ of orientation of the main axis of the polarization ellipse and the ellipticity phase shift $\psi_l$ of the optical signal output by the set formed by the local oscillator LO 210 and the polarization diversity actuator PDA 211, into adequate commands suitable to the polarization diversity actuator PDA 211 (e.g., drive voltage change). The polarization diversity manager PDM 260 consequently controls the polarization diversity actuator PDA 211 via the line 261. In a particular embodiment, the polarization diversity manager PDM 260 further converts instructions, which are received from the value decision block VDB 250 via a line 252 for modifying phase of the optical signal output by the set formed by the local oscillator LO 210 and the polarization diversity actuator PDA 211 so as to escape the aforementioned situations where the electrical signal i(t) equals to zero independently of $\varphi_s$ and $\varphi_l$.

The signal strength manager SSM 290 controls the local oscillator LO 210 via the line 291. The signal strength manager SSM 290 converts instructions, which are received from the value decision block VDB 250 via a line 253 for modifying the strength of the signal output by the local oscillator LO 210, into adequate commands suitable to the local oscillator LO 210. The signal strength manager SSM 290 consequently controls the local oscillator LO 210 via the line 291. For instance, the signal strength manager SSM 290 adjusts injected current injected when the local oscillator LO 210 is a Directly Modulated Laser (DML), or adjusts drive voltage signature when the oscillator LO 210 is an Electro-absorption Modulated Laser (EML).

The detuning manager DM 270 controls the local oscillator LO 210 via a line 271. The detuning manager DM 270 converts instructions, which are received from the value decision block VDB 250 via a line 253 for modifying the wavelength of the optical signal output by the local oscillator LO 210, into adequate commands suitable to the local oscillator LO 210. The detuning manager DM 270 consequently controls the local oscillator LO 210 via the line 271. For instance, the detuning manager DM 270 adjusts the Peltier current when the local oscillator LO 210 is equipped with a Peltier module, or drive voltage when the local oscillator LO 210 is equipped with an optical ring resonator.

Furthermore, the value decision block VDB 250 may provide instructions to the transimpedance amplifier 245 via the line 251 for modifying electrical gain of the transimpedance amplifier 245.

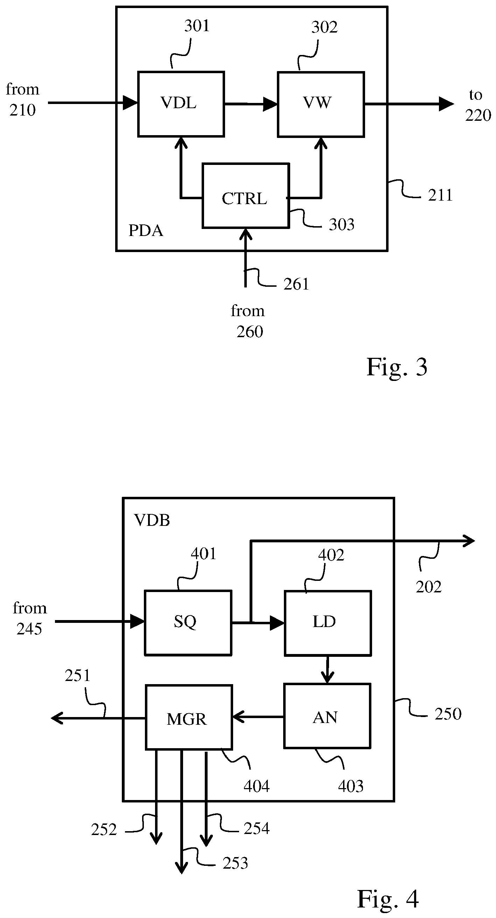

**Fig. 3** schematically represents a particular embodiment of the polarization diversity actuator PDA 211. The particular embodiment of Fig. 3 is suitable for using a local oscillator providing a linearly-polarized optical signal, as commonly found off-the-shelf; however, the particular embodiment of Fig. 3 is also suitable for using a local oscillator providing a circular or elliptical polarization.

Low costs laser used nowadays in network access segment are typically semiconductor lasers that are linearly polarized. Such lasers can be used as the local oscillator LO 210. A way to transform a linear polarization into an elliptical polarization is to place a waveplate (also referred to as *wavelength plate*) at the output of the laser. Waveplates are based on birefringent materials with two orthogonal axes of different velocity, which induce a phase shift between the projections of a given field on the two axes of the birefringent materials. Injecting therein a linearly-polarized optical signal outputs an elliptically-polarized optical signal. It however may be taken into account that a waveplate couples both polarization ellipticity and phase shift, which means that phase shift between the optical signal output by the local oscillator LO 210 and the optical signal received from the coherent optical transmitter may also be impacted by the waveplate. Thus, in case the ellipticity has to be independently controlled with a waveplate, a compensating phase shift may be applied on both axes of the optical signal output by the local oscillator LO 210 to counter the waveplate phase shift thus introduced.

In order to control ellipticity of the optical signal output by the set formed by the local oscillator LO 210 and the polarization diversity actuator PDA 211, a variable waveplate can be used. Variable waveplates are particular waveplates which phase shift between their slow (extraordinary) and fast (ordinary) axes can be controlled. Liquid crystal variable retarders and pockets cells are examples of variable waveplates. Tunable highly birefringent photonic Liquid Crystal Fibers can alternatively be used. Retardance is then tuned over a specified range by changing drive voltage.

According to the embodiment shown in Fig. 3, the optical signal issued from the local oscillator LO 210 is preferably injected in a variable delay line VDL 301. The variable delay line VDL 301 can be built from isotropic material. The variable delay line VDL 301 introduces adjustable delay on the overall optical signal, which therefore impacts the phase of the optical signal. The variable delay line VDL 301 is here used to adjust $\phi_l$ and thus to mitigate the difference between $\phi_l$ and $\phi_s$. Acting on configuration of the variable delay line VDL 301 enables in particular to escape the aforementioned situations where the electrical signal $i(t)$ equals to zero independently of $\varphi_s$ and $\varphi_l$. For example, the variable delay line VDL 301 is a liquid crystal variable retarder with a delay parameter $\Delta L$ in working range $[0; 2\pi]$ and aligned in factory with the polarization of a linearly-polarized laser forming the local oscillator LO 210.

At the output of the variable delay line VDL 301 (if any), the polarization diversity actuator PDA 211 further comprises a variable waveplate VW 302. The variable waveplate VW 302 is here used to adjust $\psi_l$ and thus to consequently mitigate the difference between $\psi_l$ and $\psi_s$. As already mentioned, the variable waveplate VW 302 may further impact phase shift; in this case, the variable delay line VDL 301 and the variable waveplate VW 302 can be used to jointly adjust $\phi_l$ and thus to consequently mitigate the difference between $\phi_l$ and $\phi_s$.

The polarization diversity actuator PDA 211 may further comprise a controller CTRL 303 configured for interpreting instructions received from the controlling unit 280, and more particularly from the polarization diversity manager PDM 260, and for converting these instructions into commands (such as appropriate drive voltage) to the variable delay line VDL 301 and the variable waveplate VW 302.

In a variant, the controlling unit 280, and more particularly from the polarization diversity manager PDM 260, directly transmits commands (such as appropriate drive voltage) to the variable delay line VDL 301 and the variable waveplate VW 302. In this case, the controlling unit 280, and more particularly the polarization diversity manager PDM 260, may comprise a look-up table LUT that links, on one hand, actuation of changes in $\varphi_l$ (and consequently in $\Delta\varphi$) and/or in $\psi_l$ (and consequently in $\Delta\psi$) and, on the other hand, commands to be applied to the polarization diversity actuator PDA 211, more particularly to the variable delay line VDL 301 and the variable waveplate VW 302. Various configurations of the polarization diversity actuator PDA 211, namely of the variable waveplate VW 302 in the arrangement of Fig. 3, may lead to a same modification of $\varphi_l$ and/or of $\psi_l$. Therefore, in a particular embodiment, the look-up table LUT further contains reactivity information for switching from any current configuration of the polarization diversity actuator PDA 211 to any other targeted configuration of the polarization diversity actuator PDA 211. More particularly, the look-up table LUT further contains reactivity information for switching from any current configuration of the variable waveplate VW 302 to any other targeted configuration of the variable waveplate VW 302. The look-up table LUT may further contain reactivity information for switching from any current configuration of the variable delay line VDL 301 to any other targeted configuration of the variable delay line VDL 301. Consequently, when the controlling unit 280, and more particularly the polarization diversity manager PDM 260, has to apply change in $\varphi_l$ and/or in $\psi_l$, it selects the configuration of the polarization diversity actuator PDA 211, namely of the variable waveplate VW 302, which implies the shortest adjustment time in view of the current configuration of the polarization diversity actuator PDA 211, namely of the variable waveplate VW 302. Moreover, knowledge of this adjustment time of the variable waveplate VW 302, and possibly of the variable delay line VDL 301, may be used by the controlling unit 280 in order to determine at which instant adjustment is effectively in place (see notably Fig. 9).

**Fig. 4** schematically represents a particular embodiment of the value decision block VDB 250.

The value decision block VDB 250 comprises a level detector LD 402. The level detector LD 402 detects voltage output by the transimpedance amplifier TIA 245 and performs conversion into digital data more easily handled for further analysis.

The value decision block VDB 250 further comprises an analyzer AN 403. The analyzer AN 403 receives digital data from the level detector LD 402. The analyzer AN 403 compares the value of the voltage output by the transimpedance amplifier TIA 245 with the predefined threshold percentage (e.g., 20%) of the theoretical maximum achievable thanks to the boosting terms. The analyzer AN 403 then makes a decision regarding whether or not at least one action has to be taken in order to ensure that operable boosting terms are met.

The value decision block VDB 250 further comprises a manager MGR 404. The manager MGR 404 receives from the analyzer AN 403 instructions with respect to action to be taken. The manager MGR 404 consequently provides polarization diversity-related instructions to the polarization diversity manager PDM 260 via the line 252 and/or signal strength instructions to the signal strength manager SSM 290 via the line 253 and/or electrical gain control instructions to the transimpedance amplifier 245 via the line 251 and/or detuning-related instructions to the detuning manager DM 270 via the line 254.

In a preferred embodiment, the value decision block VDB 250 further comprises a squaring module SQ 401. The squaring module SQ 401 squares the electrical signal received from the transimpedance amplifier TIA 245 (i.e., the squaring module SQ 401 multiplies the input electrical signal by itself). It simplifies analysis performed by the analyzer AN 403, by ensuring that only positive values are handled (which is easier for comparing them in absolute value with a threshold). To do so, the squaring module SQ 401 is for example an analog amplifier with both inputs receiving the electrical signal received in input of the value decision block VDB 250. Usage of the squaring module SQ 401 further advantageously increases contrast for the boosting terms with respect to the optical signal received from the coherent optical transmitter.

On the contrary, operating without the squaring module SQ 401 enables implementing NRZ-OOK-alike demodulation based on negative minimum and positive maximum levels.

The value decision block VDB 250 outputs the signals 202 to be processed for demodulation. These signals may be the output of the squaring module SQ 401. These signals may simply be the output of the transimpedance amplifier TIA 245.

**Fig. 5** schematically represents an algorithm performed by the controlling unit 280 for configuring the coherent optical receiver 200. The controlling unit 280 continuously receives analog electrical signal from the transimpedance amplifier TIA 245.

In a step S501, the controlling unit 280 performs signal level detection with respect to the electrical signal output by the transimpedance amplifier TIA 245, as already explained above. The step S501 outputs digital representation, according to a sampling rate, of the analog electrical signal (voltage) output by the transimpedance amplifier TIA 245. Level detection preferably includes integration or averaging over a predetermined quantity of samples.

In a step S502, the controlling unit 280 performs comparison of the level detected in the step S501 with the predefined threshold percentage (e.g., 20%) of the theoretical maximum signal level which is achievable thanks to the boosting terms. As already mentioned, the theoretical maximum is defined according to the gain of the local oscillator LO 210, to the conversion rate $R$ by the photodiode 230 of incident photons into electrons and to the gain of the transimpedance amplifier TIA 245. The conversion rate $R$ by the photodiode 230 of incident photons into electrons is known to the controlling unit 280 by pre-configuration (e.g., in factory). When the gain of the local oscillator LO 210 is not defined (i.e., controlled) by the controlling unit 280, the gain of the local oscillator LO 210 is known to the controlling unit 280 by pre-configuration (e.g., in factory). When the gain of the transimpedance amplifier TIA 245 is not defined (i.e., controlled) by the controlling unit 280, the gain of the transimpedance amplifier TIA 245 is known to the controlling unit 280 by pre-configuration (e.g., in factory). Alternatively, the theoretical maximum signal level which is achievable thanks to the boosting terms is known to the controlling unit 280 by pre-configuration (e.g., in factory). Further alternatively, the applicable threshold is known to the controlling unit 280 by pre-configuration (e.g., in factory). In this latter case, the pre-configured applicable threshold remains a predefined threshold percentage (e.g., 20%) of the theoretical maximum signal level which is achievable thanks to the boosting terms, except that the effective value of the predefined threshold percentage (e.g., 20%) is not dynamically determined by the controlling unit 280. The predefined threshold percentage may change over time: for example, the controlling unit 280 is instructed by an application layer of the optical coherent receiver 200, or by a demodulator of the optical coherent receiver 200, that means signal-to-noise ratio of the electrical signal should be strengthened or, on the contrary, loosened.

In a step S503, the controlling unit 280 checks whether or not the comparison shows that the level detected in the step S501 is greater than, or equal to, the threshold in question. When the level detected in the step S501 is lower than the threshold in question, a step S504 is performed. When the level detected in the step S501 is greater than, or equal to, the threshold in question, the step S501 is repeated. A waiting or standby time may be inserted before executing again the step S501. The duration of the waiting or standby time is less than the time observed with optical fibers to change polarization of transported optical signals in a predefined proportion in the polarization space. For instance, the waiting or standby time duration is 100 milliseconds.

In the step S504, the controlling unit 280 instructs a configuration change of the set formed by the local oscillator LO 210 and the polarization diversity actuator PDA 211, wherein the configuration change is at least one configuration modification selected among the following set Li: modification of the ellipticity main axis orientation $\varphi_l$ and/or modification of the ellipticity phase shift $\psi_l$. In a particular embodiment, the set Li further includes modification of the phase $\phi_l$. In a preferred embodiment, the modification of the phase $\phi_l$ is performed by applying a predefined shift. In a more preferred embodiment, the predefined shift is $\pi$ for the phase $\phi_l$ (and consequently for $\Delta\phi$).

Then, the step S501 is repeated. No waiting time is preferably applied at that time, in order for the controlling unit 280 to determine whether another phase shift modification and/or ellipticity modification of the optical signal output by the set formed by the local oscillator LO 210 and the polarization diversity actuator PDA 211 has to be performed.

**Fig. 6** schematically represents an algorithm performed by the controlling unit 280 for adjusting configuration of the coherent optical receiver 200, in a particular embodiment. In this particular embodiment, the controlling unit 280 adjusts configuration of the coherent optical receiver 200, when judging that level detection with respect to the electrical signal output by the transimpedance amplifier TIA 245, by modifying strength of the optical signal output by the local oscillator LO 210 and/or modifying the gain of the transimpedance amplifier TIA 245 before deciding to apply configuration change by selecting at least one configuration modification among the set Li. Indeed, in most arrangements with off-the-shelf components, reactivity of changing ellipticity parameters is less (i.e., takes more time) than reactivity of changing phase, which in turn is less than reactivity of changing oscillator signal strength, which further in turn is less than reactivity of changing transimpedance amplifier gain (EGC, electrical gain control).

In a step S601, the controlling unit 280 performs signal level detection, and integration or averaging over a predefined quantity of samples, as already explained. Over time, since optical signal received from the coherent optical transmitter is substantially distributed over a dynamics range, signal mean level is representative of the dynamics range.

In a step S602, the controlling unit 280 checks whether suitable mean level is met. In other words, the controlling unit 280 checks whether the mean level of signal over integration or averaging time is above the predefined threshold percentage (e.g., 20%). Moreover, the controlling unit 280 checks whether the mean level of signal over integration or averaging time is below an upper predefined threshold percentage (e.g. 80%), in order to avoid saturation conditions. When the mean level is suitable, the step S601 is repeated, preferably with applying a standby time period; otherwise, a step S603 is performed.

In a step S603, the controlling unit 280 checks whether a signal mean level increase is needed. When there is a need for signal mean level increase, a step S605 is performed; otherwise, a signal mean level decrease is needed and a step S604 is performed.

In the step S604, the controlling unit 280 decreases signal mean level by adjusting gain of the transimpedance amplifier TIA 245 as first priority and decreases signal mean level by adjusting gain of the local oscillator LO 210 (strength of the optical signal output by the local oscillator LO 210) as second priority. In other words, when there is still margin to decrease the gain of the transimpedance amplifier TIA 245, then the controlling unit 280 does so; otherwise, the controlling unit 280 decreases the gain of the local oscillator LO 210. Doing so increases opportunities to operate later on the transimpedance amplifier TIA 245, which enables to react more rapidly in case of need for signal mean level increase, since reactivity of adjustment of the gain of the transimpedance amplifier TIA 245 is better than reactivity of adjustment of the gain of the local oscillator LO 210. Then, the step S601 is repeated, preferably with applying a waiting or standby time period.

In the step S605, the controlling unit 280 checks whether there is still margin either to increase the gain of the transimpedance amplifier TIA 245 or to increase the gain of the local oscillator LO 210. When there is still margin either to increase the gain of the transimpedance amplifier TIA 245 or to increase the gain of the local oscillator LO 210, a step S607 is performed; otherwise, a step S606 is performed.

In the step S606, the controlling unit 280 instructs configuration change by selecting at least one configuration modification among the aforementioned set Li. Since effective achievement of the configuration change may take some non-negligible time, the controlling unit 280 may step-by-step decrease signal mean level by adjusting gain of the transimpedance amplifier TIA 245 as first priority and decreases signal mean level by adjusting gain of the local oscillator LO 210 as second priority while the configuration of the polarization diversity actuator PDA 211 progressively changes. Thus, saturation is avoided when the configuration change of the polarization diversity actuator PDA 211 is effectively in place. Then, the step S601 is repeated, preferably with applying a waiting or standby time period.

In the step S607, the controlling unit 280 increases signal mean level by adjusting gain of the local oscillator LO 210 (strength of the optical signal output by the local oscillator LO 210) as first priority and increases signal mean level by adjusting gain of the transimpedance amplifier TIA 245 as second priority. In other words, when there is still margin to increase the gain of the local oscillator LO 210, then the controlling unit 280 does so; otherwise, the controlling unit 280 increases the gain of the transimpedance amplifier TIA 245. However, in a particular embodiment where evolution of signal mean level shows need for faster adjustment (in view of reactivity of the change of the gain of the local oscillator LO 210), the controlling unit 280 increases the gain of the transimpedance amplifier TIA 245 as first priority in order to benefit from better reactivity. This can be completed by also increasing the gain of the local oscillator LO 210. Then, the step S601 is repeated, preferably with applying a waiting or standby time period.

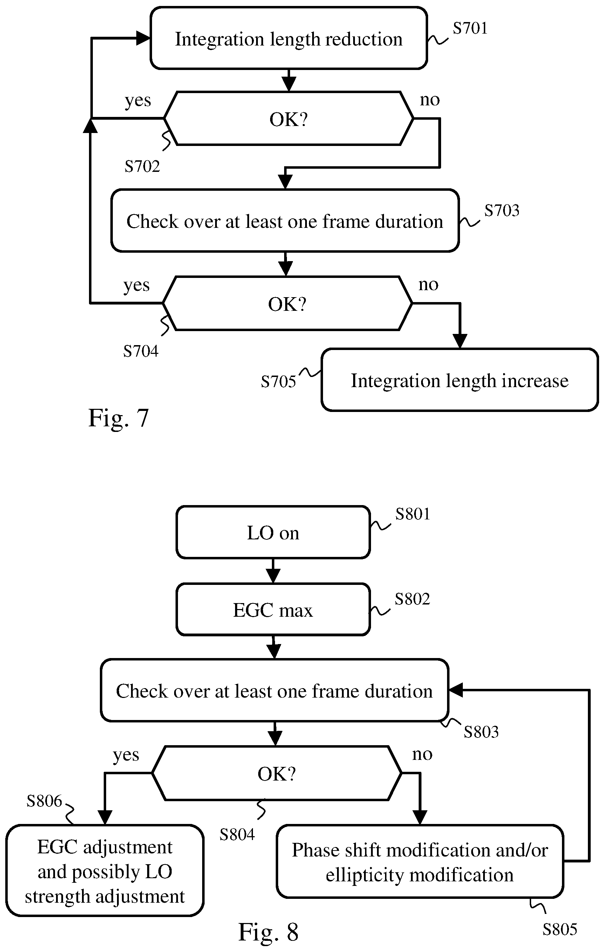

**Fig. 7** schematically represents an algorithm performed by the controlling unit 280 for configuring an integration or averaging length (quantity of samples used for integration or averaging) for signal detection, in a particular embodiment. Integration or averaging may be performed over a fixed (e.g., in factory) quantity of samples. As a variant, Fig. 7 shows an algorithm for dynamically defining the quantity of samples used for integration or averaging. Reactivity and energy consumption of signal detection are thus improved. The algorithm in Fig. 7 starts when signal has been detected and the coherent optical receiver 200 has been configured in accordance, for instance as addressed hereafter with respect to Figs. 8 and 9. Before execution of the algorithm of Fig. 7, integration or averaging has been performed using a maximum integration or averaging length Nmax.

In a step S701, the controlling unit 280 decreases integration or averaging length N (quantity of samples). Decrease is for example performed by subtracting a predefined step $\Delta N$.

In a step S702, the controlling unit 280 performs signal level detection and integration or averaging over the integration or averaging length N and checks whether signal is still detected with the decreased integration or averaging length N. The controlling unit 280 may have to wait for expiration of a time period of duration Tc for detecting signal, wherein Tc is a duration of a cycle period that gives rhythm to the transmissions from the coherent optical transmitter to the coherent optical receiver 200. When signal is still detected, the controlling unit 280 repeats the step S701 and thus reduces again the integration or averaging length N; otherwise, a step S703 is performed.

In the step S703, the controlling unit 280 optionally continues attempting detecting signal. The controlling unit 280 may have to wait for expiration of at least one other time period of duration Tc before deciding that no signal is effectively detected. Indeed, temporary absence of signal transmitted by the coherent optical transmitter may be faced (depending on transmission cycle specifications, e.g., whether or not the coherent optical transmitter is supposed to transmit an optical signal, such as a beacon optical signal, at each cycle).

In a step S704 (when the step S703 has been implemented), the controlling unit 280 checks whether signal has been detected in the step S703. If signal has been detected, the controlling unit 280 repeats the step S701 and thus reduces again the integration or averaging length N; otherwise, a step S705 is performed. One may note that when the step S703 is not implemented, the controlling unit 280 directly performs the step S705.

In the step S705, the controlling unit 280 restores the previous value of the integration or averaging length N (typically, by adding the predefined step ΔN to the current value of the integration or averaging length N).

In a particular embodiment, the controlling unit 280 repeats at least once the algorithm of Fig. 7 with a lower predefined step ΔN'. This enables refining the integration or averaging length N and thus improving optimization of the integration or averaging length.

**Fig. 8** schematically represents an algorithm performed by the controlling unit 280 for initializing configuration of the coherent optical receiver 200, in a particular embodiment.

In a step S801, the controlling unit 280 activates the local oscillator LO 210. The local oscillator LO 210 is therefore on.

In a step S802, the controlling unit 280 configures the gain of the transimpedance amplifier TIA 245 (EGC) at a maximum value EGCmax. The gain of the local oscillator LO 210 is preferably however not configured to be at its maximum so as to avoid saturation.

In a step S803, the controlling unit 280 checks whether signal is detected for at least one time period of duration Tc. The controlling unit 280 may have to perform such check during several time periods of duration Tc. Indeed, temporary absence of signal transmitted by the coherent optical transmitter may be faced (depending on transmission cycle specifications, e.g., whether or not the coherent optical transmitter is supposed to transmit an optical signal, such as a beacon optical signal, at each cycle).

In a step S804, the controlling unit 280 determines if signal has been detected in the step S803. If signal has been detected in the step S803, a step S806 is performed; otherwise, a step S805 is performed.

In the step S805, the controlling unit 280 instructs configuration change by selecting at least one configuration modification among the aforementioned set Li. Modification of the optical signal output by the set formed by the local oscillator LO 210 and the polarization-diversity actuator PDA 211 thus occurs. In the arrangement of Fig. 3, the controlling unit 280 preferably acts on configuration of the variable delay line VDL 301 as first priority. Indeed, off-the-shelf variable delay lines can typically have better reactivity than variable waveplates. Then, the step S803 is repeated. The controlling unit 280 may have to check whether signal is detected for at least one time period of duration Tc after the configuration change has effectively taken place, so as to take into account reactivity of, e.g., the variable delay line VDL 301 and/or the variable waveplate VW 302 in the arrangement of Fig. 3. For example, configuration change may take several milliseconds to be effective, whereas the cycle duration Tc is typically defined at 125 microseconds for network access segment.

In the step S806, the controlling unit 280 performs adjustment of the gain of the transimpedance amplifier TIA 245 (EGC), so as to reduce gain of the transimpedance amplifier TIA 245. The controlling unit 280 may also complementarily adjust the gain of the local oscillator LO 210. The algorithm of Fig. 6 may be used to do so. Refinement of integration length may also take place, as already described with respect to Fig. 7. Once tuning of the coherent optical receiver is done as disclosed above, demodulation can be initiated.

**Fig. 9** schematically represents an algorithm performed by the controlling unit 280 for initializing configuration of the coherent optical receiver 200, in another particular embodiment. In the scope of the algorithm of Fig. 9, it is considered that the coherent optical transmitter transmits a beacon optical signal at each cycle of duration Tc. Benefiting from this aspect, initialization can be initiated without activating the local oscillator LO 210. It means that signal detection is then performed on $(E_{0s}')^2$ only, in absence of the boosting terms. Execution of the algorithm of Fig. 9 enables speeding up configuration of the coherent optical receiver since it avoids that inappropriate configuration of the set formed by the local oscillator LO 210 and the polarization diversity actuator PDA 211 leads to absence of signal at the output of the photodiode 230 and thus at the output of the transimpedance amplifier TIA 245.

In a step S901, the controlling unit 280 inactivates (if not already done) the local oscillator LO 210. The local oscillator LO 210 is therefore off.

In a step S902, the controlling unit 280 configures the gain of the transimpedance amplifier TIA 245 (EGC) at its maximum value EGCmax.

In a step S903, the controlling unit 280 performs sliding integration over a duration of a quantity *Ns* of several modulation symbols. Since signal detection cannot benefit from the boosting terms, integration should be longer than usual (i.e., than with benefit from the boosting terms when the local oscillator LO 210 is on).

In a step S904, once signal is detected, the controlling unit 280 performs sequence analysis so as to recognize beacon predefined sequence.

In a step S905, the controlling unit 280 checks whether the beacon sequence is recognized. When the controlling unit 280 has recognized the beacon sequence, a step S906 is performed; otherwise, the step S903 is repeated.

In the step S906, the controlling unit 280 activates the local oscillator LO 210. The local oscillator LO 210 is therefore on. The gain of the local oscillator LO 210 is preferably not configured to be at its maximum so as to avoid saturation.

In a step S907, the controlling unit 280 performs time synchronization. Recognition of the beacon predefined sequence enables the controlling unit 280 to determine therefrom an instant Ic of beginning of the cycle (of duration Tc) to which the beacon relates. The controlling unit 280 is able to determine respective instants of beginning of later cycles (adding M times the duration Tc to the instant Ic so as to determine the instant of beginning of the M-th next cycle). It can be noted that performing time synchronization can be performed before or in parallel to activating the local oscillator LO 210.

In a step S908, the controlling unit 280 tunes configuration of the coherent optical receiver 200. The controlling unit 280 first test an initial configuration. Configuration change, by selecting at least one configuration modification among the aforementioned set Li, may be performed to ensure that signal level is above the aforementioned predefined threshold percentage. The gain of the transimpedance amplifier TIA 245 and/or the gain of the local oscillator LO 210 may also be adjusted. The algorithm of Fig. 6 may be implemented to do so. Since reactivity of the adjustment may take more time than the duration Tc of each cycle, the controlling unit 280 may have to determine an instant of beginning of a cycle that starts after adjustment has effectively taken place (i.e., the M-th next cycle for which M*Tc > Ta, where Ta is the time needed for the adjustment to effectively take place). Reiteration of the step S907 is therefore performed in accordance so as to perform signal level detection at an appropriate timeframe in which beacon transmission is expected. Once tuning of the coherent optical receiver is done as disclosed above, demodulation can be initiated.

One may note that in the embodiments disclosed above, when wavelength detuning is detected, wavelength adjustment is preferably performed by the controlling unit 280 before investigating configuration change, by selecting at least one configuration modification among the aforementioned set Li, and/or adjustment of the gain of the transimpedance amplifier TIA 245 and/or adjustment of the gain of the local oscillator LO 210.

**Claims**

1. A coherent optical receiver intended to receive an amplitude-shift keying modulated optical signal from a coherent optical transmitter, comprising:

    - a local oscillator;
    - a polarization-diversity actuator configured for modifying an optical signal output by the local oscillator; so as to form an optical signal with elliptical polarization with main axis orientation $\varphi_l$ and ellipticity phase shift $\psi_l$;
    - a 2 x 2 coupler, having one input aiming at receiving the amplitude-shift keying modulated optical signal received from the coherent optical transmitter and the other input receiving another optical signal which is output by a set formed by a local oscillator and the polarization diversity actuator, so as to enable the local oscillator to provide a boosting effect to the amplitude-shift keying modulated optical signal received from the coherent optical transmitter, the 2 x 2 coupler further having one output connected to a set formed by a photodiode followed by a Direct Current filter removing a continuous component of an analog electrical signal output by the photodiode;
    - a transimpedance amplifier converting current electrical signal output by the Direct Current filter into voltage electrical signal;
    - a controlling unit in form of electronic circuitry configured for detecting voltage electrical signal output by the transimpedance amplifier and, when the voltage electrical signal output by the transimpedance amplifier is below or equal to a predefined threshold percentage of theoretical maximum achievable by the boosting effect, the electronic circuitry is further configured for instructing a configuration change of the polarization diversity actuator, wherein the configuration change is at least one configuration modification selected among the following set Li:
    - modification of the ellipticity main axis orientation $\varphi_l$; and
    - modification of the ellipticity phase shift $\psi_l$.

2. The coherent optical receiver according to claim 1, wherein the modification of the ellipticity main axis orientation

$\varphi_l$ is performed by applying a predefined shift equal to $\dfrac{\pi}{4}$ and the modification of the ellipticity phase shift $\psi_l$ is performed by applying a predefined shift equal to $\dfrac{\pi}{2}$.

3. The coherent optical receiver according to claim 1 or 2, wherein the polarization-diversity actuator comprises a variable waveplate for enabling modification of the ellipticity main axis orientation $\varphi_l$ and for enabling modification of the ellipticity phase shift $\psi_l$.

4. The coherent optical receiver according to any one of claims 1 to 3, wherein the set Li further includes modification of a phase $\phi_l$ of the optical signal output by the set formed by the local oscillator and the polarization diversity actuator.

5. The coherent optical receiver according to claim 4, wherein the modification of the modification of the phase $\phi_l$ is performed by applying a predefined shift equal to $\pi$.

6. The coherent optical receiver according to claim 4 or 5, wherein the polarization-diversity actuator comprises a variable delay line for enabling modification of the phase $\phi_l$.

7. The coherent optical receiver according to any one of claims 1 to 6, wherein the electronic circuitry is further configured for modifying gain of the local oscillator and/or modifying gain of the transimpedance amplifier before deciding to apply configuration change by selecting at least one configuration modification among the set Li.

8. The coherent optical receiver according to claim 7, wherein the electronic circuitry is configured for:

   - checking whether a mean level of the voltage electrical signal output by the transimpedance amplifier over integration or averaging time is suitable, namely above the predefined threshold percentage and below an upper predefined threshold percentage so as to avoid saturation conditions;
   - when the mean level is not suitable in that a signal mean level decrease is needed, decreasing signal mean level by adjusting gain of the transimpedance amplifier as first priority and decreasing signal mean level by adjusting gain of the local oscillator as second priority; and
   - when the mean level is not suitable in that a signal mean level increase is needed, checking whether there is still margin either to increase gain of the transimpedance amplifier or to increase gain of the local oscillator, and when such margin exists, increasing signal mean level by adjusting gain of the transimpedance amplifier as first priority and increasing signal mean level by adjusting gain of the local oscillator as second priority, and otherwise, instructing configuration change by selecting at least one configuration modification among the set Li.

9. The coherent optical receiver according to any one of claims 1 to 8, wherein the electronic circuitry is configured for performing integration or averaging over a quantity N of samples of the voltage electrical signal output by the transimpedance amplifier and for dynamically defining the quantity N by implementing:

   - performing integration or averaging using a maximum quantity of samples Nmax;
   - decreasing the quantity N and checking whether the voltage electrical signal output by the transimpedance amplifier is still detected with the decreased integration or averaging length N;
   - as far as the voltage electrical signal output by the transimpedance amplifier is still detected, continuing decreasing the quantity N, and otherwise, restoring the previous value of the quantity N.

10. The coherent optical receiver according to any one of claims 1 to 9, wherein the electronic circuitry is configured for initializing configuration of the coherent optical receiver by implementing:

   - activating the local oscillator;
   - configuring a gain of the transimpedance amplifier at a maximum value EGCmax;
   - checking, for at least one time period of duration Tc, whether the voltage electrical signal output by the transimpedance amplifier is detected, the duration Tc being a duration of a cycle period that gives rhythm to the transmissions from the coherent optical transmitter to the coherent optical receiver;
   - when the voltage electrical signal output by the transimpedance amplifier is detected, performing adjustment of the gain of the transimpedance amplifier, and possibly of a gain of the local oscillator, so as to reduce the gain of the transimpedance amplifier, and otherwise, instructing configuration change by selecting at least one configuration modification among the set Li.

11. The coherent optical receiver according to any one of claims 1 to 10, wherein the electronic circuitry is configured for initializing configuration of the coherent optical receiver by implementing:

- configuring a gain of the transimpedance amplifier at a maximum value EGCmax, the local oscillator being inactivated;
- performing sliding integration of the voltage electrical signal output by the transimpedance amplifier over a duration of a quantity *Ns* of several modulation symbols;
- once the voltage electrical signal output by the transimpedance amplifier is detected, performing sequence analysis as far as a predefined sequence of a beacon supposed to be transmitted by the coherent optical transmitter at the beginning of each transmission cycle is recognized;
- when the predefined sequence is recognized, activating the local oscillator and performing time synchronization so as to determine instants of beginning of later transmission cycles;
- tuning configuration of the coherent optical receiver by firstly testing an initial configuration at a determined instant of the beginning of a later transmission cycle, and instructing configuration change of the polarization diversity actuator by selecting at least one configuration modification among the set Li as far as the voltage electrical signal output by the transimpedance amplifier is not above the predefined threshold percentage.

12. The coherent optical receiver according to any one of claims 1 to 11, wherein the controlling unit includes a look-up table that links, on one hand, actuation of modification in the ellipticity main axis orientation $\varphi_l$ and/or of modification of the ellipticity phase shift $\psi_l$ and, on the other hand, commands to be applied to the polarization diversity actuator.

13. The coherent optical receiver according to claim 12, wherein various configurations of the polarization diversity actuator lead to a same modification of the ellipticity main axis orientation $\varphi_l$ and/or of the ellipticity phase shift $\psi_l$, and the look-up table further contains reactivity information for switching from any current configuration of the polarization diversity actuator to any other targeted configuration of the polarization diversity actuator, and the electronic circuitry is configured for, when changing configuration of the configuration of the polarization diversity actuator, selecting the configuration of the polarization diversity actuator which implies the shortest adjustment time in view of a current configuration of the polarization diversity actuator.

14. The coherent optical receiver according to any one of claims 1 to 13, wherein the electronic circuitry is configured for squaring the voltage electrical signal output by the transimpedance amplifier when performing signal level detection.

15. An Optical Network Unit intended to be used in a Passive Optical Network, wherein the Optical Network Unit includes the coherent optical receiver according to any one of claims 1 to 14 for receiving an amplitude-shift keying modulated optical signal transmitted by a coherent optical transmitter included in an Optical Line Terminal of the Passive Optical Network.

100

141

120

142    130    120    110

120

143

120

Fig. 1A

100

120

140    110

Fig. 1B

Fig. 2

Fig. 3

Fig. 4

S501

Integration and level detection

S502

Comparison

yes     OK?     no

S504      S503

Phase shift modification and/or ellipticity modification

Fig. 5

Integration and level detection

S601

yes    Suitable mean level ?    no

S602    yes    Need for increase ?    no

S603

S605      S604

no    Remaining margin for LO strength and EGC?    yes

EGC adjustment (first priority), LO strength adjustment (second priority)

606

Phase shift modification and/or ellipticity modification

LO strength adjustment (first priority), EGC adjustment (second priority)

Fig. 6      S607

Fig. 7

Fig. 8

Fig. 9

Europäisches
Patentamt

European
Patent Office

Office européen
des brevets

## EUROPEAN SEARCH REPORT

Application Number

EP 20 16 5106

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 260 745 A1 (PHILIPS NV [NL]) 23 March 1988 (1988-03-23) * figures 3B, 4 * * page 6, lines 20-47 * ----- | 1-15 | INV. H04B10/61 H04J14/02 |
| A | US 5 134 509 A (OLSHANSKY ROBERT [US] ET AL) 28 July 1992 (1992-07-28) * figures 1, 4 * * column 6, lines 60-68 * * column 7, lines 64-68 * * column 8 * * column 9, lines 1-32 * ----- | 1-15 | |
| A | WO 86/07513 A1 (BRITISH TELECOMM [GB]) 18 December 1986 (1986-12-18) * figures 1, 2A * * page 6, lines 7-32 * * page 7, lines 1-17 * * page 4, lines 13-22 * * page 9, lines 11-28 * ----- | 1-15 | |
| A | US 5 052 051 A (NAITO TAKAO [JP] ET AL) 24 September 1991 (1991-09-24) * figures 2, 5 * * columns 3, 4, 5 * ----- | 1-15 | **TECHNICAL FIELDS SEARCHED (IPC)** H04B H04J |

The present search report has been drawn up for all claims

| Place of search | Date of completion of the search | Examiner |
|---|---|---|
| Munich | 28 September 2020 | Lobato Polo, I |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 16 5106

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2020

| Patent document cited in search report | | Publication date | Patent family member(s) | | Publication date |
|---|---|---|---|---|---|
| EP 0260745 | A1 | 23-03-1988 | EP | 0260745 A1 | 23-03-1988 |
| | | | NL | 8602350 A | 18-04-1988 |
| US 5134509 | A | 28-07-1992 | NONE | | |
| WO 8607513 | A1 | 18-12-1986 | AU | 5994186 A | 07-01-1987 |
| | | | EP | 0227729 A1 | 08-07-1987 |
| | | | JP | S63500067 A | 07-01-1988 |
| | | | WO | 8607513 A1 | 18-12-1986 |
| US 5052051 | A | 24-09-1991 | CA | 2000997 A1 | 20-04-1990 |
| | | | EP | 0365028 A2 | 25-04-1990 |
| | | | JP | H0734080 B2 | 12-04-1995 |
| | | | JP | H02110524 A | 23-04-1990 |
| | | | US | 5052051 A | 24-09-1991 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- IMT Vision: Framework and overall objectives of the future development of IMT for 2020 and beyond. *International Mobile Telecommunications (IMT) recommendations ITU-R M.2083,* September 2015
- Study on new radio access technology: Radio access architecture and interfaces. *3GPP TR 38.801 V 14.0.0,* March 2017

- **K. KIKUCHI.** Fundamentals of Coherent Optical Fiber Communications. *Journal of Lightwave Technology,* January 2016, vol. 34 (1
- **NOÉ et al.** Endless Polarization Control Systems for Coherent Optics. *IEEE Journal of Lightwave Technology,* July 1988, vol. 6 (7), 1199-1207